**Europäisches Patentamt**

**European Patent Office**

**Office européen des brevets**

(19)

(11) Numéro de publication : **0 086 154**
**B1**

(12)

# FASCICULE DE BREVET EUROPÉEN

(45) Date de publication du fascicule du brevet :
**09.11.88**

(21) Numéro de dépôt : **83400242.0**

(22) Date de dépôt : **04.02.83**

(51) Int. Cl.⁴ : **G 01 F 23/38**, **F 17 C 13/02**,
**B 67 D 5/34**

(54) **Réservoir à liquide et procédé pour le faire fonctionner.**

(30) Priorité : **05.02.82 FR 8202022**

(43) Date de publication de la demande :
**17.08.83 Bulletin 83/33**

(45) Mention de la délivrance du brevet :
**09.11.88 Bulletin 88/45**

(84) Etats contractants désignés :
**AT BE CH DE FR GB IT LI LU NL SE**

(56) Documents cités :
**FR-A- 2 259 049**
**FR-A- 2 274 865**
**FR-A- 2 306 935**
**US-A- 3 209 297**
**US-A- 4 083 387**

(73) Titulaire : **COMPAGNIE DES GAZ DE PETROLE PRI-MAGAZ**
**64, avenue Hoche**
**F-75008 Paris (FR)**

(72) Inventeur : **Bourgeon, Michel**
**30 rue Montesquieu**
**F-38100 Grenoble (FR)**

(74) Mandataire : **Bourgognon, Jean-Marie et al**
**Cabinet Flechner 22, Avenue de Friedland**
**F-75008 Paris (FR)**

Jouve, 18, rue St-Denis, 75001 Paris, France

## Description

La présente invention se rapporte aux réservoirs à liquide et notamment aux réservoirs à gaz de pétrole liquéfiés pour automobiles.

La législation prévoit que tous les réservoirs de G.P.L. pour automobiles doivent posséder une jauge de niveau extérieure au réservoir afin qu'à tout moment l'automobiliste puisse être informé du niveau de carburant dont il dispose.

Pour obtenir l'étanchéité exigée, la solution universellement adoptée est la transmission magnétique qui donne par ailleurs une très bonne fiabilité. Le principe est le suivant : à l'intérieur du réservoir un flotteur libre entraîne un aimant émetteur et à l'extérieur du réservoir un aimant récepteur positionne une aiguille sur un cadran et entraîne un rhéostat ou autre élément indicateur permettant la transmission de l'indication du niveau du réservoir sur la jauge du tableau de bord du véhicule.

Deux techniques très différentes sont appliquées au niveau des sécurités d'emplissage des réservoirs automobiles.

A. Les réservoirs de G.P.L. sont équipés d'un dispositif automatique ne permettant pas le remplissage par la phase liquide au-delà de 80 à 85 % de la contenance totale du réservoir, afin de conserver un ciel gazeux permettant la dilatation du liquide selon les variations thermiques.

B. Les réservoirs peuvent être remplis à 100 % mais sont équipés d'une soupape de sécurité permettant, en cas de variation thermique, la dilatation du liquide et son évacuation à l'extérieur du véhicule.

Dans le cas B ci-dessus, les réservoirs ont 5 orifices recevant respectivement :
- une vanne d'emplissage avec anti-retour ;
- une vanne de départ d'alimentation avec limiteur de débit ;
- une jauge de niveau avec ou sans transmetteur ;
- une soupape de sécurité ;
- un robinet de purge de la phase gazeuse.

Le tout est enfermé dans un boîtier étanche relié à l'air libre à l'extérieur.

On s'est rendu compte à l'usage, et malheureusement à la suite d'accidents, des risques que comporte un tel système. En effet, notamment lorsqu'un véhicule, par exemple en hiver, vient d'effectuer son plein, puis stationne dans un garage chauffé sous une villa, le coefficient de dilatation très important des G.P.L. va forcément provoquer l'ouverture de la soupape de sécurité et répandre le gaz dans le local avec tous les risques que cela comportera lors de la remise en route du véhicule.

Pour pallier ces inconvénients, plusieurs systèmes mécaniques ont déjà été réalisés à ce jour, mais leur réalisation est très délicate pour plusieurs raisons. Le réservoir laisse un passage très restreint et ne permet pas l'emploi d'un flotteur assez conséquent ; il faut d'autre part tenir compte des facteurs qui se produisent au moment de l'emplissage : turbulences, contre-pression, givrage, houle de niveau thermique et de pression différentielles très variables du fait des pressions d'emplissage des pompes de distribution qui varient couramment de 9 à 15 bar selon leur réglage. Tous ces facteurs font que ces appareils sont très délicats à réaliser et de ce fait très vulnérables et ne peuvent donner une fiabilité sérieuse.

Au FR-A-2 259 049, on décrit un réservoir qui comprend une jauge de niveau dont la position est indiquée par un élément indicateur. Il est prévu des moyens pour comparer la valeur d'une caractéristique de l'élément indicateur à une valeur de référence, des moyens pour faire varier la valeur de référence et des moyens pour commander l'électrovanne en fonction du résultat de la comparaison. Grâce à ce dispositif, le livreur n'a plus besoin d'être présent à côté de la citerne pour surveiller la jauge et l'imprécision sur le pourcentage de remplissage de la citerne, en cas de non fonctionnement de la jauge, est moindre.

L'invention vise un réservoir à liquide du type mentionné au préambule de la revendication 1. Habituellement, la jauge de niveau et l'élément indicateur sont solidaires respectivement de deux aimants en regard l'un de l'autre par leurs deux pôles qui s'attirent.

L'invention a pour but de réaliser un réservoir particulièrement fiable, éliminant les accidents dus notamment à une défaillance éventuelle de la jauge à l'intérieur du récipient.

Le réservoir suivant l'invention est caractérisé par la partie caractérisante de la revendication 1.

L'élément indicateur joue ainsi un rôle nouveau. Sa caractéristique doit atteindre une certaine valeur un certain temps après le début du remplissage. Si elle ne l'atteint pas, c'est qu'il y a une anomalie. L'électrovanne se ferme. L'élément indicateur, qui peut comprendre notamment un rhéostat dont on vérifie la valeur de l'évolution de la résistance en fonction du temps au cours du remplissage, témoigne ainsi non seulement du niveau du liquide dans le récipient, mais surtout du bon état de fonctionnement des éléments internes se trouvant dans le récipient.

Compte tenu des remous soubresauts et autres turbulences qui agitent le liquide et influencent la jauge, généralement en forme de flotteur, et de la difficulté de définir avec précision l'instant de début de remplissage et les conditions initiales de remplissage, dues aux jeux et à l'inertie initiale, il est souhaitable que la fermeture de l'électrovanne ne puisse pas se produire immédiatement au début du remplissage, au moins quand le réservoir est sensiblement vide. C'est pourquoi l'invention est perfectionnée par les caractéristiques de la revendication 2 et de la revendication 3.

On assure la sécurité par les caractéristiques des revendications 5 et 6. L'invention vise également un procédé pour faire fonctionner le réservoir comme défini à la revendication 7.

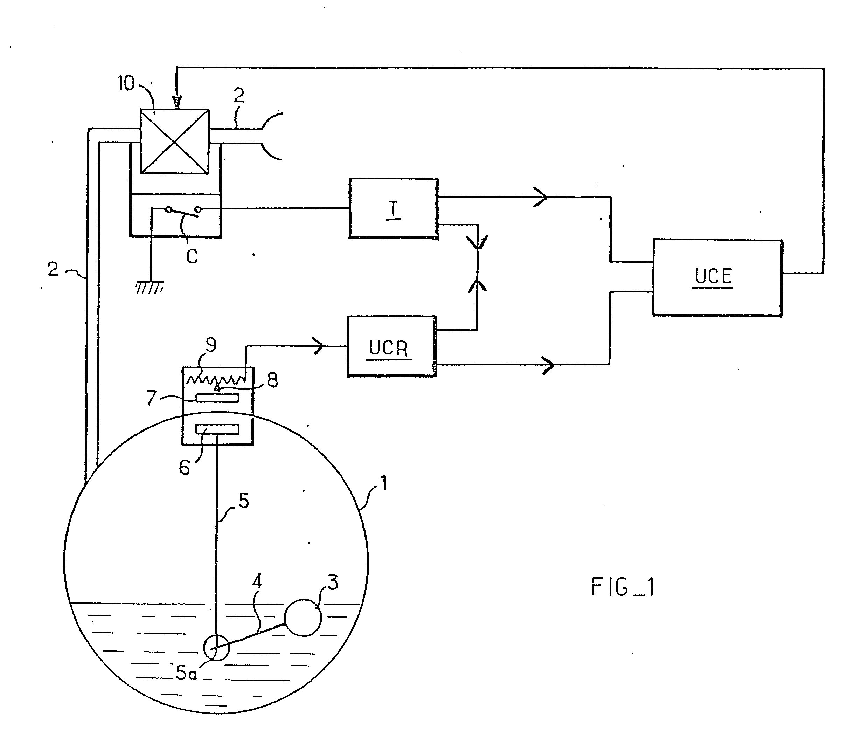

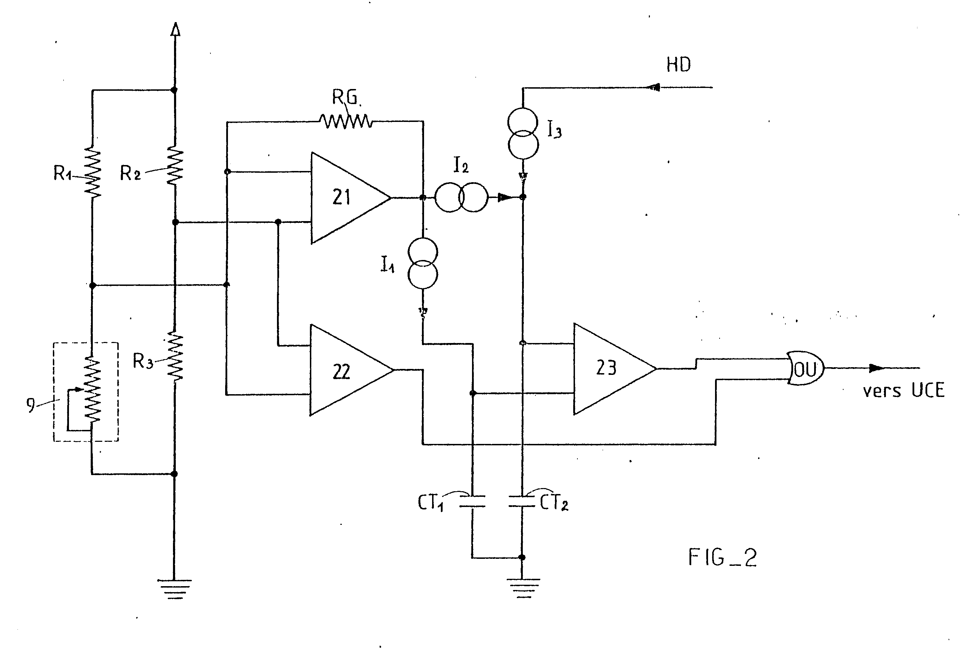

La figure 1 du dessin annexé illustre l'invention, la figure 2 étant un schéma du circuit électrique.

Le réservoir à G.P.L. représenté au dessin comprend un récipient 1 en matière amagnétique muni d'un conduit 2 d'emplissage. A l'intérieur du réservoir 1, un flotteur 3 est monté de manière à s'élever en fonction du niveau du liquide dans le récipient 1. Le flotteur 3 est monté tournant par sa tige 4 sur l'axe 5a qui entraîne un aimant permanent 6 par une tige 5.

A l'extérieur de la paroi non magnétique du récipient 1 est monté tournant un aimant permanent 7. Le pôle sud de l'aimant 6 est en regard du pôle nord de l'aimant 7. Le pôle nord de l'aimant 6 est en regard du pôle sud de l'aimant 7. Quand l'aimant 6 tourne au fur et à mesure que le flotteur 3 s'élève, l'aimant 7 tourne de la même façon.

L'aimant 7 porte un curseur 8 d'un rhéostat 9 relié à une entrée d'une unité de contrôle de remplissage UCR.

L'une des entrées de l'unité UCR est reliée à la sortie d'un temporisateur T qui fait varier la valeur d'une résistance de référence en fonction du temps à partir de l'ouverture d'une électrovanne 10 commandée par des moyens UCE. L'unité UCE de commande de l'électrovanne 10 commande celle-ci en fonction du résultat de la comparaison de la valeur de la résistance 9 et de la résistance de référence.

La sortie de l'unité de contrôle de remplissage UCR est reliée à une entrée du temporisateur T, (par une liaison non représentée au dessin parce que bidirectionnelle dans la technique), lequel est relié à l'unité de commande de l'électrovanne UCE. Celle-ci est reliée à l'électrovanne 10 qui est munie d'un manocontact C différentiel.

Le réservoir fonctionne de la manière suivante :

Quand on met un pistolet d'emplissage dans le conduit de remplissage 2, on ferme le contact C du manocontact différentiel en raison de la pression différentielle de part et d'autre de l'électrovanne 10 qui est fermée. La fermeture de ce contact C déclenche l'armement du temporisateur T pour un temps t.

L'unité de contrôle de remplissage UCR fournit une autorisation au temporisateur T et à l'unité de commande de l'électrovanne UCE, puisque le récipient 1 est vide et que donc la résistance du rhéostat 9 est maximum ou faible (si le récipient 9 contient encore un peu de carburant). L'unité de commande d'électrovanne UCE donne l'ordre d'ouverture de l'électrovanne 10. Le remplissage s'effectue. La résistance du rhéostat 9 diminue jusqu'à une valeur prédéterminée, correspondant par exemple à un remplissage à 80 %, où alors l'unité de contrôle de remplissage UCR détecte cette valeur et ordonne à l'unité UCE de fermer l'électrovanne 10.

Si, au cours du remplissage, en raison d'une anomalie, la valeur de la résistance du rhéostat 9 ne varie plus ou varie moins vite que prévu, l'unité UCR annule le réarmement permanent du temporisateur T, ce qui a pour effet d'annuler le signal de validation de l'unité UCE et ce qui ferme l'électrovanne 10 à l'épuisement du temps t à partir du moment où l'on a détecté l'anomalie. Ce temps est dégressif au fur et à mesure du remplissage.

A la figure 2, l'amplificateur 21 amplifie d'un Gain G l'écart de tension dans les branches du pont formé par les résistances R1, R2, R3 et 9, et peut fournir à sa sortie deux courants I1 et I3 alimentant le comparateur de temps.

Le comparateur de seuil 22 bascule lorsque la tension aux bornes du pont due à la variation de la jauge 9 équivaut à un seuil de 80 % et fournit à sa sortie un signal combiné avec celui du comparateur de temps 23 qui arrête l'électrovanne.

Le comparateur de temps 23 compare deux rampes de temps fournies par I1 en provenance de l'amplificateur 21 et par I3 du fait que le manocontact C est fermé. Une troisième source de courant I2 en provenance de l'amplificateur 21 est dérivée vers I3 afin d'accélérer la rampe de temps au fur et à mesure du remplissage. Si, pour une anomalie quelconque, la rampe de temps fournie par I3 progresse plus vite que la rampe de temps fournie par I1 et contrôlée par la résistance 9, le comparateur de temps 23 basculera et arrêtera l'électrovanne.

Le contrôle de l'électrovanne s'effectue de la façon suivante :

Ou le pourcentage de remplissage est atteint ;

Ou le temps de remplissage est épuisé ;

dans ces deux cas l'arrêt de l'électrovanne intervient.

Il est à noter que la suralimentation I2 de la rampe de temps contrôlée par I3 conditionne le temps de remplissage restant en cas d'anomalie pour être quasiment nul en fin de remplissage, c'est-à-dire que si une anomalie intervient vers la fin du remplissage, le comparateur de temps arrêtera immédiatement l'électrovanne.

**Revendications**

1. Réservoir à liquide comprenant un récipient (1) contenant une jauge de niveau (3), un élément indicateur (9) de la position de la jauge (3) disposé à l'extérieur du récipient (1), un conduit de remplissage (2) du récipient (1) muni d'une électrovanne (10), des moyens (UCR) pour comparer la valeur d'une caractéristique de l'élément indicateur (9) à une valeur de référence, des moyens (UCE) pour commander l'électrovanne (10) en fonction du résultat de la comparaison, et des moyens (T) pour faire varier la valeur de référence, caractérisé en ce que lesdits moyens (T) font varier la valeur de référence en fonction du temps à partir de l'ouverture de l'électrovanne (10).

2. Réservoir suivant la revendication 1, caractérisé en ce que les moyens de comparaison (UCR) sont reliés aux moyens (UCE) de commande de l'électrovanne (10) par l'intermédiaire d'un temporisateur (T) et les moyens de comparaison (UCR) ne donnent l'ordre de fermeture aux moyens de commande (UCE) de l'électrovanne que si le résultat de la comparaison n'a jamais été, au cours de la durée de temporisation, tel qu'il autorise le remplissage.

3. Réservoir suivant la revendication 2, caractérisé en ce que la durée de temporisation est dégressive au fur et à mesure que la valeur de la caractéristique de l'élément indicateur (9) se modifie sous l'effet du remplissage.

4. Réservoir suivant l'une des revendications 1 à 3, caractérisé en ce que l'élément indicateur (9) comprend un rhéostat dont on vérifie la valeur de la résistance.

5. Réservoir suivant la revendication 1, 2, 3 ou 4, caractérisé en ce que les moyens de commande (UCE) commandent la fermeture de l'électrovanne (10) quand la valeur de la caractéristique de l'élément indicateur (9) atteint un seuil prédéterminé.

6. Réservoir suivant l'une des revendications 1 à 5, caractérisé en ce que les moyens de commande (UCE) ne peuvent commander l'ouverture de l'électrovanne (10) que si la valeur de la caractéristique de l'élément indicateur (9) est revenue à une valeur limite inférieure d'un montant donné au seuil prédéterminé.

7. Procédé pour faire fonctionner un réservoir suivant l'une des revendications précédentes, caractérisé en ce qu'il consiste à surveiller la valeur de la résistance d'un rhéostat en fonction du temps qui s'écoule à partir du début du remplissage et à interrompre le remplissage si cette valeur reste différente de la valeur normale pendant une durée prédéterminée.

## Claims

1. A liquid tank comprising a container (1) containing a level gauge (3) and an indicator element (9) for indicating the position of the gauge (3), said element being located on the outside of the container (1), a filling duct (2) for filling the container (1) said duct being fitted with an electro-magnetic sluice gate (10), means (UCR) for comparing the value of a characteristic of the indicator element (9) with a reference value, means (UCE) for controlling the electro-magnetic sluice gate as a function of the results of the comparison and means (T) the reference value characterized in that said means (T) varies as a function of time starting from the moment of opening of the electro-magnetic sluice gate (10).

2. The tank of claim 1, characterized in that the comparison means (UCR) are connected to the control means (UCE) for the electro-magnetic sluice gate (10) via a timer (T) and the comparison means (UCR) do not give the order to close to the control means (UCE) for the electro-magnetic sluice gate unless the results of the comparison have never proved satisfactory throughout the timing operation.

3. The tank of claim 2, characterized in that the timing period decreases as the characteristic value of the indicator element is modified due to the filling operation.

4. The tank of claims 1 to 3, characterized in that the indicator element (9) comprises a rheostat the resistance value of which is checked.

5. The tank of claims 1, 2, 3 or 4, characterized in that the control means (UCE) control the closing of the electromagnetic sluice gate (10) when the value of the characteristic of the indicator element (9) reaches a predetermined threshold.

6. The tank of claims 1 to 5, characterized in that the control means (UCE) can control the opening of the electromagnetic sluice gate (10) only if the value of the characteristic of the indicator element (9) has returned to a limit which is lower by given amount than the predetermined threshold.

7. Process for operating a tank as claimed in the preceeding claims, characterized in that it comprises monitoring the value of the resistance of the rheostat as a function of the time which elapses from the start of the filling operation and interrupting the filling operation if this value remains different from the normal value for a predetermined length of time.

## Patentansprüche

1. Flüssigkeitsbehälter mit einem Behältnis (1), in welchem ein Niveaufühler (3) untergebracht ist, mit einem Stellungsgeber (9), der mit dem Niveaufühler (3) zusammenarbeitet und außerhalb des Behältnisses (1) angeordnet ist, mit einer Fülleitung (2) des Behältnisses (1), die mit einem Magnetventil (10) versehen ist, mit einer Vergleichseinrichtung (UCR), die den Wert einer Kenngröße des Stellungsgebers (9) mit einem Referenzwert vergleicht, mit Ventilsteuermitteln (UCE) zum Betätigen des Magnetventiles (10) in Abhängigkeit vom Ergebnis dieses Vergleichs und mit Variationsmitteln (T) zum Ändern des Referenzwertes, dadurch gekennzeichnet, daß die Variationsmittel (T) den Referenzwert in Abhängigkeit von derjenigen Zeit ändern, die nach dem Öffnen des Magnetventiles (10) verstrichen ist.

2. Flüssigkeitsbehälter nach Anspruch 1, dadurch gekennzeichnet, daß die Vergleichseinrichtung (UCR) über einen Zeitgeber (T) mit den auf das Magnetventil (10) arbeitenden Ventilsteuermitteln (UCE) verbunden sind und daß die Vergleichseinrichtung (UCR) den Befehl zum Schließen des Magnetventiles nur dann an die Ventilsteuermittel (UCE) abgibt, wenn das Vergleichsergebnis während der ganzen Periode des Zeitgebers (T) niemals so gewesen ist, daß es ein Füllen autorisiert.

3. Behälter nach Anspruch 2, dadurch gekennzeichnet, daß die Zeitgeberperiode in dem Maße abnimmt, in dem die Kenngröße des Stellungsgebers (9) sich gemäß der zunehmenden Befüllung des Behältnisses (1) ändert.

4. Flüssigkeitsbehälter nach einem der Ansprüche 1 bis 3, dadurch gekennzeichnet, daß der Stellungsgeber (9) einen veränderlichen Widerstand aufweist, dessen Widerstandswert überwacht wird.

5. Flüssigkeitsbehälter nach Anspruch 1, 2, 3 oder 4, dadurch gekennzeichnet, daß die Ventilsteuermittel (UCE) das Schließen des Magnetventiles (10) dann befehlen, wenn der Wert der Kenngröße des Stellungsgebers (9) eine vorgegebene Schwelle erreicht.

6. Flüssigkeitsbehälter nach einem der Ansprüche 1 bis 5, dadurch gekennzeichnet, daß die Ventilsteuermittel (UCE) das Öffnen des Magnetventiles (10) nur dann tefehlen können, wenn der Wert der Kenngröße des Stellungsgebers (9) auf einen Grenzwert zurückgekehrt ist, der um einen vorgegebenen Betrag kleiner ist als die vorgegebene Schwelle.

7. Verfahren zum Betreiben eines Flüssigkeitsbehälters nach einem der Ansprüche 1 bis 6, dadurch gekennzeichnet, daß der Wert des Widerstandes eines veränderlichen Widerstandselementes in Abhängigkeit von derjenigen Zeit überwacht wird, die seit dem Beginn des Füllvorganges verflossen ist, und daß das Füllen unterbrochen wird, wenn dieser Wert innerhalb einer vorgegebenen Zeitspanne vom Normalwert verschieden bleibt.

FIG_1

0 086 154

FIG_2

vers UCE

HD

0 086 154